# EUROPÄISCHE PATENTSCHRIFT

(11) **EP 1 975 642 B1**
(45) Veröffentlichungstag und Bekanntmachung des Hinweises auf die Patenterteilung: **02.12.2015**
(21) Anmeldenummer: 08005541.1
(22) Anmeldetag: 25.03.2008
(51) Int. Cl.: G01S 7/481

(54) **Verkehrsüberwachungsgerät mit einem Gerätegehäuse mit vertikalem Einschub**
Traffic monitoring device with a device housing with vertical drawer
Appareil de surveillance du trafic doté d'un boîtier d'appareil équipé d'un tiroir enfichable vertical

(30) Priorität: 29.03.2007 DE 202007004950 U
(43) Veröffentlichungstag der Anmeldung: 01.10.2008
(73) Patentinhaber: JENOPTIK Robot GmbH, 40789 Monheim am Rhein (DE)
(72) Erfinder: Fliegen, Markus, 41751 Viersen (DE)
(74) Vertreter: Schaller, Renate

(56) Entgegenhaltungen:
- EP-A- 0 866 434
- WO-A-98/35330
- WO-A-99/18554
- WO-A-2007/009226
- DE-A1- 3 918 002
- DE-U1- 8 214 613
- US-A- 5 938 717

## Beschreibung

Die Erfindung betrifft ein Verkehrsüberwachungsgerät mit mehreren Gerätemodulen, die eine Strahlung aussenden und/oder empfangen und die nach Montage des Verkehrsüberwachungsgerätes an seinem Bestimmungsort, bevorzugt einem Brückengeländer oberhalb einer Fahrbahn, in ihrer Lage gegenüber Merkmalen am Einsatzort, z. B. dem Abstand zur Fahrbahn und deren Verlauf, ausgerichtet werden müssen und/oder die am Bestimmungsort gewartet oder repariert werden sollen.
Ein derartiges Verkehrsüberwachungsgerät ist gattungsgemäß aus der WO 98/35330 bekannt.

In der Verkehrsüberwachungstechnik werden Gerätemodule, die eine Strahlung aussenden und/oder empfangen, gemeinsam mit Beleuchtungseinrichtungen (gemeinsam Gerätemodule genannt) in einem Gehäuse untergebracht, welches dauerhaft stationär, z. B. an einem Pfeiler neben der Fahrbahn oder an Brücken oberhalb der Fahrbahn montiert wird. Strahlung aussendende und/oder empfangende Gerätemodule sind beispielsweise optische, opto-elektrische, oder elektromagnetische Mess- oder Aufnahmegeräte, die jeweils eine Strahl-Achse aufweisen.

An ein Gehäuse für ein solches Verkehrsüberwachungsgerät ergeben sich spezielle Anforderungen.
Gleich anderen Gerätegehäusen sollte ein solches Gerätegehäuse so ausgeführt sein, dass es die eingehausten Gerätemodule sicher vor störenden Umwelteinflüssen schützt. Darüber hinaus soll das Gerätegehäuse vor unbefugter Manipulation der Gerätemodule schützen und eine einfache Handhabung der Ausrichtung der Gerätemodule sowie deren Wartung und Reparatur nach der Montage vor Ort ermöglichen.
Für eine Montage oberhalb der Fahrbahn muss jederzeit sicher gestellt sein, dass keine Teile von oder aus dem Gehäuse auf die Fahrbahn fallen können, auch nicht während der Montage oder während der Ausführung von Wartungs- und Reparaturarbeiten.

In der WO 98/35330 wird ein Verkehrsüberwachungsgerät (Fahrzeugdetektor-Anordnung) vorgeschlagen mit einer in einem Gehäuse eingehausten Zentraleinheit und einer Detektoreinheit, die über einem Gestell außenseitig am Geländer an einem Brückenbauwerk montierbar sind. Um bei Montage-, Reparatur- und Wartungsarbeiten die Gefahr zu reduzieren, dass Gegenstände von der Fahrzeugdetektor-Anordnung auf die Fahrbahn fallen, weist das Gestell einen schwenkbaren Abschnitt auf, der aus einer außenseitig des Geländers angeordneten Stellung in eine über dem Brückenbauwerk angeordneten Stellung schwenkbar ist. Wesentliche Anteile der Montage-, Reparatur- und Wartungsarbeiten können somit innenseitig des Brückengeländers durchgeführt werden. Nach Beendigung der Arbeiten muss der schwenkbare Abschnitt des Gestells zurück in seine außenseitige Stellung geschwenkt und dort gesichert werden.
Um die Fahrzeugdetektor-Anordnung zwischen ihrer eigentlichen Arbeitsposition außerhalb des Brückengeländers und einer Wartungsposition innerhalb des Brückengeländers zu bewegen, ist eine Hebevorrichtung mit einer Seilwinde vorgesehen, die auf das Gestell aufgesetzt wird.
Die Befestigung der Fahrzeug-Detektoranordnung an einem außerhalb des Brückengeländers angeordneten Gestell sowie die Notwendigkeit eines Hilfsmittels, um es zu schwenken, machen zwar unbefugte Manipulationen an der Fahrzeugdetektor-Anordnung nahezu unmöglich, führen jedoch zu einer aufwendigen Konstruktion und verlängern die Reparatur- und Wartungszeit erheblich um die Zeit, die erforderlich ist, die Fahrzeugdetektor-Anordnung in die Wartungsposition und dann zurück in die Arbeitsposition zu bringen. In jedem Fall können diese Arbeiten nicht während des laufenden Betriebes der Fahrzeug-Detektoranordnung vorgenommen werden.

DE8214613U offenbart ein Verkehrsüberwachungsgerät mit einem Gerätegehäuse, wobei das Gerätegehäuse aus einer äußeren Gehäusewanne, einem in der Gehäusewanne vertikal verschiebbaren Einschub und einem Gehäusedach besteht, wobei ein eine Strahl-Achse aufweisendes Gerätemodul fest im Einschub angeordnet ist, und wobei die Ausrichtung der Strahl-Achse des Gerätemoduls zu Umgebungsmerkmalen nach Montage des Verkehrsüberwachungsgerätes am Einsatzort erfolgt indem die Gehäusewanne durch Höhenverstellung und Schwenkung in der Horizontalebene verstellt wird.

Der Erfindung liegt die Aufgabe zu Grunde, ein Verkehrsüberwachungsgerät zur Montage an einem Brückengeländer zu schaffen, das ohne Hilfsmittel und schnell von einer Arbeitsposition in eine Wartungsposition umgesetzt werden kann und bei dem während des laufenden Betriebes des Verkehrsüberwachungsgerätes einzelne Gerätemodule ausgerichtet und gewartet werden können.

Des Weiteren ist es Aufgabe der Erfindung, ein Verkehrsüberwachungsgerät zu schaffen, in dem eine Vielzahl von Gerätemodulen, die eine optische Achse aufweisen, zueinander und zu Merkmalen der Umgebung nach der Montage vor Ort auf einfache Weise ausgerichtet werden können.

Diese Aufgabe wird für ein Verkehrsüberwachungsgerät mit den Merkmalen des Anspruches 1 gelöst.
Vorteilhafte Weiterbildungen sind in den Unteransprüchen beschrieben.

Anhand der Zeichnung wird die Vorrichtung im Folgenden beispielhaft näher erläutert. Es zeigen:
- Fig. 1a: Gerätegehäuse eines an einem Brückengeländer montierten Verkehrsüberwachungsgerätes in der Arbeitsposition,
- Fig. 1b: Gerätegehäuse des Verkehrsüberwachungsgerätes gemäß Fig. 1a in der Wartungsposition,

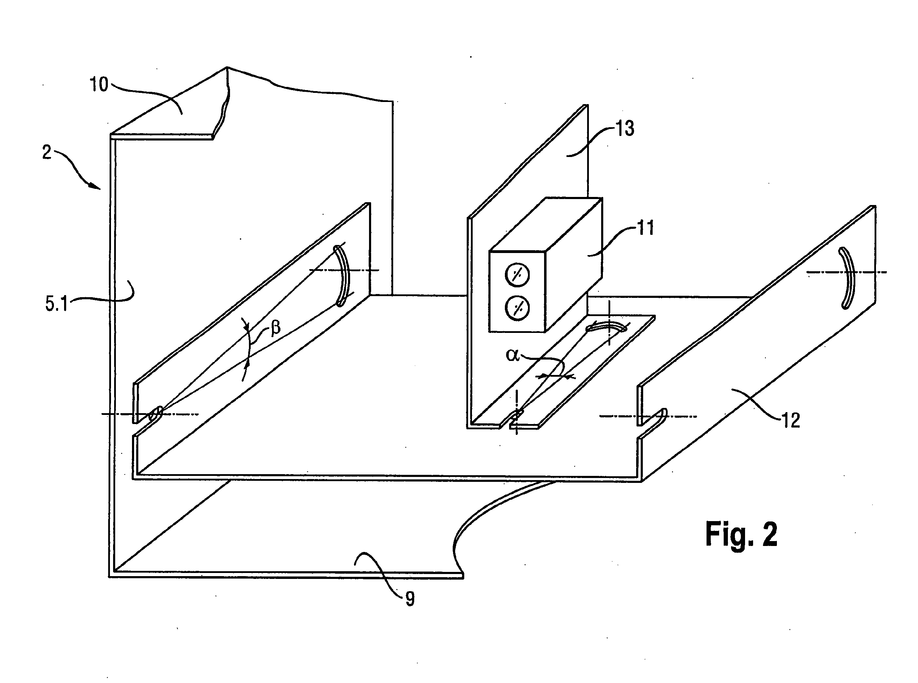

- Fig. 2: einen Einschub mit einem Gerätemodul,
- Fig. 3: das Verkehrsüberwachungsgerät ohne Frontwand

Bei den Figuren wurde der Übersichtlichkeit halber auf die Darstellung aller Merkmale, die zur Erläuterung nicht erforderlich sind, verzichtet. Ebenso sind reale Größenverhältnisse aus den Figuren nicht ableitbar.

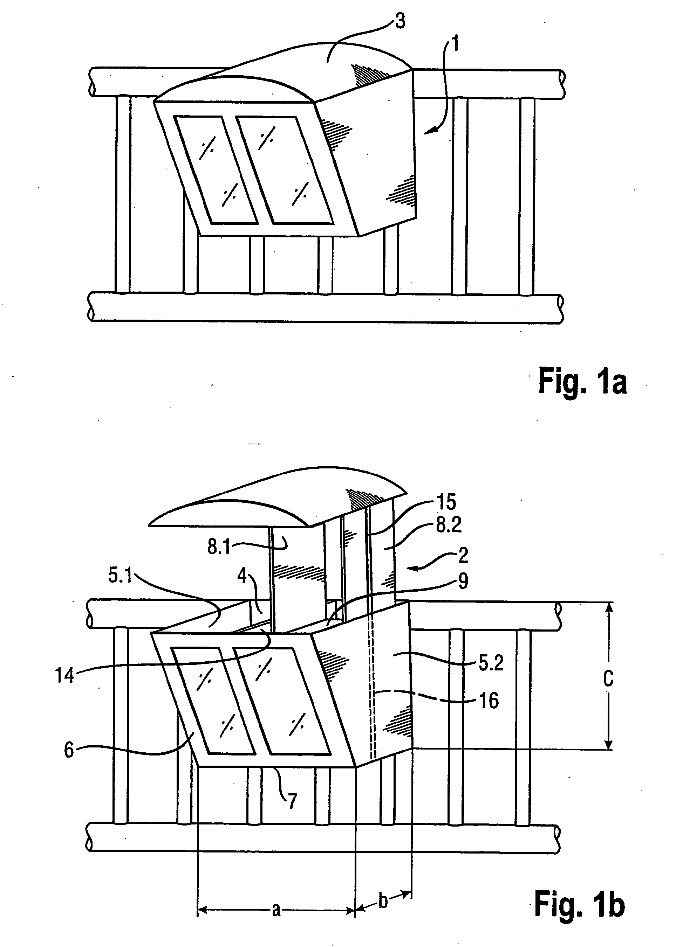

In den Fig. 1a und 1b ist ein Gerätegehäuse eines Verkehrsüberwachungsgerätes in einer geschlossenen Arbeitsposition (Fig. 1a) und einer geöffneten Wartungsposition (Fig. 1 b) dargestellt.

Das Verkehrsüberwachungsgerät und somit das Gerätegehäuse ist außenseitig an einem Brückengeländer oberhalb einer Fahrbahn fest montiert.
Ist eine Ausrichtung der Achsen der Gerätemodule 11 horizontal in Fahrbahnrichtung vorgesehen, so erfolgt die Montage so, dass die Rückwand 4 lotrecht und parallel zum Brückengeländer befestigt wird. Die Montage kann z. B. über an der Rückwand 4 des Gerätegehäuses vorhandene C-Schienen und am Brückengeländer montierte Nutsteine erfolgen.
Es ist aber auch eine lotrechte Befestigung möglich, bei der die Rückwand 4 und das Brückengeländer einen spitzen Winkel miteinander einschließen. Dies kann insbesondere von Interesse sein, wenn die Achsen der Gerätemodule 11 horizontal in einem spitzen Winkel zur Fahrbahnrichtung ausgerichtet werden sollen.

Damit einzelne sich im Gerätegehäuse befindende Gerätemodule 11, nachdem das Gerätegehäuse fest am Brückengeländer befestigt ist, in ihrer horizontalen und/oder vertikalen Winkellage zur Fahrbahn oder den einzelnen Fahrspuren der Fahrbahn ausgerichtet werden können, beziehungsweise damit die Gerätemodule 11, ohne dass das Verkehrsüberwachungsgerät demontiert werden muss, gewartet oder zur Reparatur entnommen werden können, ist das Gerätegehäuse besonders ausgeführt.

Das Gerätegehäuse wird gebildet von einer äußeren Gehäusewanne 1, einem Einschub 2 und einem Gehäusedach 3 und ist bevorzugt aus lackiertem Aluminium hergestellt.

Die äußere Gehäusewanne 1 wird aus einer rechteckigen Rückwand 4, einer rechten und einer linken trapezförmigen Seitenwand 5.1, 5.2, einem Boden 7 und einer rechteckigen, zum Boden 7 geneigten Frontwand 6 mit Fensteröffnungen, die durch Glasscheiben verschlossen sind, gebildet. Der Neigungswinkel zwischen der Frontwand 6 zum Boden 7 ist an die voraussichtliche Strahlungsrichtung der Gerätemodule 11, wie z. B. eine Kamera oder Messsensoren, angepasst, so dass die Strahlungsrichtung möglichst senkrecht durch die Glasscheiben austreten kann. Die Glasscheiben sind Sicherheitsglasscheiben, bevorzugt entspiegeltes Zweischeibensicherheitsglas.

Der Einschub 2 besteht aus einer rechten und einer linken Seitenplatte 8.1, 8.2, die in ihrer Form den Seitenwänden 5.1, 5.2 der Gehäusewanne 1 angepasst sind sowie einer Bodenplatte 9 und kann über einen Auszugsmechanismus in der Gehäusewanne 1 geführt zwischen zwei Endlagen bewegt werden.

Der Einschub 2 ist so dimensioniert, dass alle Gerätemodule 11, die auch nach der Montage am Brückengeländer und bevorzugt auch während des laufenden Betriebes des Verkehrsüberwachungsgerätes ausgerichtet oder gewartet werden sollen, innerhalb des Einschubes 2 einen geeigneten Platz finden. Eine geeignete Dimensionierung des Einschubes 2 erfolgt über eine Variation der Einschubbreite bis hin zur Breite a der Gehäusewanne 1 und/oder der Einschubhöhe bis hin zur Höhe c der Gehäusewanne 1.

In dem ersten Ausführungsbeispiel wird der Innenraum der Gehäusewanne 1 vollständig über die Höhe c und die Tiefe b, jedoch nur zur Hälfte über die Breite a durch den Einschub 2 ausgefüllt. Die freie Hälfte im Innenraum ist für die Montage einer Beleuchtungseinrichtung vorgesehen. In Kenntnis der örtlichen Gegebenheiten des Montageortes kann die Beleuchtungseinrichtung bereits werksseitig beziehungsweise vor der Montage vor Ort in der geöffneten Wartungsposition des Gerätegehäuses ausreichend genau ausgerichtet in der Gehäusewanne 1 montiert werden. Diese Anordnung ist möglich, da die Beleuchtungseinrichtung nicht so präzise ausgerichtet werden muss, wie eine Kamera beziehungsweise ein Messgerät. Eine Montage im Einschub 2 würde nur unnötig dessen Gewicht im beladenen Zustand erhöhen.

Der Einschub 2 wird über an den beiden Seitenplatten 8.1, 8.2 befindende Gleitführungen einerseits an der linken Seitenwand 5.2 der Gehäusewanne 1 und anderseits an einer Zwischenwand 14 geführt.

In einem anderen Ausführungsbeispiel füllt der Einschub 2 die Gehäusewanne 1 über seine Breite a und Tiefe b vollständig, jedoch über die Höhe c nur zur Hälfte aus. Der Einschub 2 wird zwischen den beiden Seitenwänden 5.1, 5.2 geführt, womit keine zusätzliche Zwischenwand 14 erforderlich ist. Dabei kann die Beleuchtungseinrichtung unterhalb des Einschubes 2 angeordnet sein.

Die Anordnung einer Zwischenwand 14 beziehungsweise der Bodenplatte 9 ermöglichen zum einen, das Größenverhältnis zwischen freiem Raum und durch den Einschub 2 ausgefülltem Raum je nach Bedarf gerätespezifisch zu wählen und zum anderen wirken sie als eine optische Abschattung zwischen den beiden Räumen. So kann in den gegebenen Ausführungsbeispielen ein direkter Lichteinfall von der Beleuchtungseinrichtung auf Mess- oder Aufnahmemodule im Einschub 2 vermieden werden.

Natürlich kann die Beleuchtungseinrichtung auch innerhalb des Einschubes 2 angeordnet sein, was allerdings als weniger vorteilhaft erscheint.

Die im Einschub 2 untergebrachten Gerätemodule 11, das können z. B. eine Kamera, ein Geschwindigkeitssensor, ein Sensor zur Ermittlung des Fahrzeugtyps oder ein Sensor zur Erkennung von Mautplaketten sein, sind jeweils an beziehungsweise auf einer Montageplatte 13 befestigt. In Fig. 1 ist eine Montageplatte 13 mit einem Gerätemodul 11 dargestellt. Die Montageplatten 13 sind jeweils horizontal um einen Winkel α auf einer Trägerplatte 12 verdrehbar befestigt. Die Trägerplatte 12 ist zwischen den Seitenplatten 8.1, 8.2 um einen Winkel β vertikal verdrehbar befestigt.

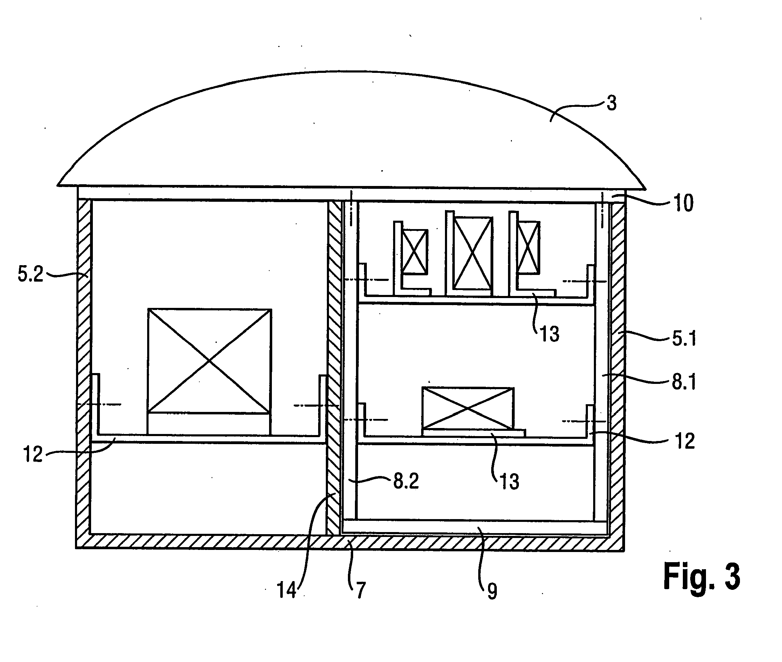

Wie in Fig. 3 dargestellt, können mehrere Montageplatten 13 auf einer Trägerplatte 12 und mehrere Trägerplatten 12 zwischen den Seitenplatten . 8.1, 8.2 im Einschub 2 angeordnet sein.

In Abhängigkeit von den Außenmaßen der Gerätemodule 11 können die Montageplatten 13 als Winkel oder Platten ausgeführt und die Gerätemodule 11 hängend oder aufsitzend befestigt sein.

Durch das Einschieben beziehungsweise Herausziehen des Einschubes 2 in beziehungsweise aus der Gehäusewanne 1 bleibt die Relativlage der Gerätemodule 11 zueinander und zur Fahrbahn unverändert, so dass die Relativlage, wie sie im herausgezogenen Einschub 2 (Wartungsposition) eingestellt wird, auch für den eingeschobenen Einschub 2 (Arbeitsposition) gegeben ist. Die geringfügige Höhenveränderung gegenüber der Fahrbahn, gleich dem Hubweg des Einschubes 2, kann hierbei vernachlässigt werden. Da zwischen der Wartungsposition und der Arbeitsposition keine andere Lageveränderung, als eine vernachlässigbare lineare Bewegung über den Hubweg erfolgt, kann die Wirkung einer Ausrichtung der Gerätemodule 11 auf die Fahrbahn in der Wartungsposition einer Ausrichtung in der Arbeitsposition gleich gesetzt werden.

Eine Ausrichtung der Module in der Wartungsposition kann also keine Nachteile für die Genauigkeit der Ausrichtung bringen. Außerdem können die Arbeiten bei laufendem Betrieb des Verkehrsüberwachungsgerätes stattfinden.

Außerdem ist es vorteilhaft, dass ein Positionswechsel durch die erfindungsgemäße Ausführung des Gerätegehäuses mit seinem vertikalen Einschub 2 schnell erfolgt, was zu einer Herabsetzung des Zeitaufwandes für die genannten Arbeiten führt.

Durch die Ausführung des Gehäuses mit einer äußeren Gehäusewanne 1, die sich zu jedem Zeitpunkt unterhalb des Einschubes 2 befindet, ist eine Art Auffangschale gegeben, so dass bei den Arbeiten keine Teile auf die Fahrbahn fallen können.

Die Gerätemodule 11 sind in der Wartungsposition, in der der Einschub 2 bei einer Montage am Brückengeländer über dieses hinausgehoben ist, für den Bediener gut zugängig.
Vorteilhaft ist das Gehäusedach 3 mit dem Einschub 2 festverbunden, sodass dieses als Griff genutzt werden kann.
Nachdem eine Verrieglung, z. B. ein Schloss, zur Vermeidung eines Zugriffes durch Unbefugte geöffnet wurde, kann der Bediener mit einer oder zwei Händen das Gehäusedach 3, z. B. an dafür vorgesehenen Griffmulden, greifen und nach oben bis in die Wartungsposition ziehen. In dieser Relativlage zwischen Einschub 2 und Gehäusewanne 1 rasten an den Seitenwänden 5.1, 5.2 beziehungsweise gegebenenfalls an der Zwischenwand 14 vorhandene Sicherheitsbolzen in Rastlöcher in den Seitenplatten 8.1, 8.2 und/oder in den Führungsschienen 15 an den Seitenplatten 8.1, 8.2 ein. Der Bediener kann das Gehäusedach 3 loslassen und hat sofort einen ungehinderten Zugang zu den im Einschub 2 untergebrachten Gerätemodulen 11. Die Montageplatten 13 und die Trägerplatten 12 sind jeweils über Schnellspannschrauben fixiert, so dass sie ohne Hilfsmittel schnell gelöst und wieder angezogen werden können, um die Gerätemodule 11 auszurichten.
Zum Schließen des Gehäuses und damit Absenken des Einschubes 2 in seine Arbeitsposition müssen zuerst nacheinander die beiden Sicherheitsbolzen entriegelt werden. Ca. 15 cm oberhalb der Arbeitsposition greift ein dritter Sicherheitsbolzen in eine der Führungsschienen 15 oder eine Seitenplatte 8.1 oder 8.2 ein und bildet einen zusätzlichen Einklemmschutz, der vor dem endgültigen Schließen entriegelt werden muss. Das Heben und Senken des Einschubes 2 wird vorzugsweise durch zwei Gasdruckdämpfer unterstützt, die gemeinsam mit den Gleitführungen den Aufzugsmechanismus bilden.

Bei einer Gehäuseausführung gemäß dem ersten Ausführungsbeispiel, bei dem der Einschub 2 nur die Hälfte des Volumens der Gehäusewanne 1 einnimmt, sind im freien Raum der Gerätewanne 1 neben der Beleuchtungseinrichtung auch alle Elektrokomponenten untergebracht, welche vorteilhaft in einem gemeinsamen Behälter an der Rückwand 4 befestigt sind. Damit ergibt sich vorteilhaft, dass im Einschub 2 keine Komponenten untergebracht werden müssen, die keiner Ausrichtung oder Wartung bedürfen. Das Gewicht des beladenen Einschubes 2 wird damit möglichst gering gehalten und die Zugängigkeit der Gerätemodule 11 im Einschub 2 wird nicht unnötig eingeschränkt.

Durch die Ausführung des Auszugsmechanismus, gebildet durch die Gleitführungen und Dämpfer im Gehäuseinneren, ist dieser im Unterschied zu dem Schwenkarm des Gerätes nach WO 98/35330 vor Umweltbelastungen weitestgehend geschützt und vor Manipulationen sicher.

Das Gehäusedach 3 ist über den Gehäusedeckel 10 am Einschub 2 befestigt. Es ist tonnenförmig ausgebildet, was folgende Vorteile mit sich bringt. Durch die Abrundungen zu den Seiten rutscht der Schnee zu den Seiten und es wird eine mögliche Schneebrettbildung vor der Frontwand 6 sicher vermieden. Durch die Tonnenform entsteht ein Hohlraum im Dach, der gegen Wärmeeinstrahlung isolierend wirkt. Auch kann in den Hohlraum eine Klimaanlage eingebaut werden.

Das Gehäusedach 3, verbunden mit dem Gehäusedeckel 10, kann auch statt mit dem Einschub 2 mit der Gehäusewanne 1 verbunden sein. In diesem Fall sind am Einschub 2 vorzugsweise Griffe vorgesehen über die der Einschub 2 angehoben und abgesenkt werden kann.

Die Konzeption des Gerätegehäuses ermöglicht es, insbesondere ein Verkehrsüberwachungsgerät mit einer Vielzahl verschiedener Gerätemodule 11 auszustatten. Eine Vielzahl von grundsätzlich durch verschiedene Geräte ausführbaren Funktionen werden zusammengeführt und können gemeinsam gehandhabt werden.

### Aufstellung der verwendeten Bezugszeichen

- 1: Gehäusewanne
- 2: Einschub
- 3: Gehäusedach
- 4: Rückwand
- 5.1: rechte Seitenwand
- 5.2: linke Seitenwand
- 6: Frontwand
- 7: Boden
- 8.1: rechte Seitenplatte
- 8.2: linke Seitenplatte
- 9: Bodenplatte
- 10: Gehäusedeckel
- 11: Gerätemodul
- 12: Trägerplatte
- 13: Montageplatte
- 14: Zwischenwand
- 15: Führungsschiene
- 16: Führungsleiste

- a: Breite
- b: Tiefe
- c: Höhe
- α: horizontaler Winkel
- β: vertikaler Winkel

## Patentansprüche

1. Verkehrsüberwachungsgerät mit einem Gerätegehäuse, wobei das Gerätegehäuse aus einer äußeren Gehäusewanne (1), einem in der Gehäusewanne (1) vertikal verschiebbaren Einschub (2) und einem Gehäusedach (3) besteht,
**dadurch gekennzeichnet, dass** mehrere, jeweils eine Strahl-Achse aufweisende Gerätemodule (11) mittels ausrichtbarer Befestigungen im Einschub (2) angeordnet sind, so dass deren Strahl-Achsen nach Montage des Verkehrsüberwachungsgerätes am Einsatzort zueinander und zu Umgebungsmerkmalen ausgerichtet werden können.

2. Verkehrsüberwachungsgerät, nach Anspruch 1, **dadurch gekennzeichnet,**
**dass** das Gehäusedach (3) mit dem Einschub (2) verbunden ist.

3. Verkehrsüberwachungsgerät nach Anspruch 1 oder 2, **dadurch gekennzeichnet, dass** eine ausrichtbare Befestigung eine um einen vertikalen Winkel (β) kippbare Trägerplatte (12) umfasst.

4. Verkehrsüberwachungsgerät nach Anspruch 1 oder 2, **dadurch gekennzeichnet,**
**dass** eine ausrichtbare Befestigung eine um einen horizontalen Winkel (α) drehbare Montageplatte (13) umfasst.

5. Verkehrsüberwachungsgerät nach Anspruch 3 oder 4, **dadurch gekennzeichnet,**
**dass** eine ausrichtbare Befestigung aus einer um einen vertikalen Winkel (β) kippbaren Trägerplatte (12) und einer auf der Trägerplatte (12) um einen horizontalen Winkel (α) drehbaren Montageplatte (13) gebildet wird.

6. Verkehrsüberwachungsgerät nach Anspruch 5, **dadurch gekennzeichnet,**
**dass** die Montageplatten (13) Winkel sind, von denen ein Schenkel mit der Trägerplatte (12) in Verbindung steht und am anderen Schenkel das Gerätemodul (11) hängend befestigt ist.

7. Verkehrsüberwachungsgerät nach Anspruch 5, **dadurch gekennzeichnet,**
**dass** die Montageplatten (13) Platten sind, auf denen das Gerätemodul (11) aufsitzend befestigt ist.

8. Verkehrsüberwachungsgerät nach einem der Ansprüche 1 - 7, **dadurch gekennzeichnet,**
**dass** die äußere Gehäusewanne (1) aus einem rechteckförmigen Boden (7) mit einer Breite (a) und einer Tiefe (b), zwei darauf senkrecht angeordneten trapezförmigen Seitenwänden (5.1 und 5.2), einer Höhe (c) sowie einer senkrecht angeordneten Rückwand (4) und einer zum Boden (7) geneigt angeordneten Frontplatte (6) mit wenigstens einer verglasten Fensteröffnung besteht.

9. Verkehrsüberwachungsgerät nach Anspruch 8, **dadurch gekennzeichnet,**
**dass** der Einschub (2) durch eine Bodenplatte (9) und zwei Seitenplatten (8.1 und 8.2) gebildet wird, die in ihrer Form und Größe an die Seitenwände (5.1, 5.2) angepasst sind, so dass der Einschub (2) die Gehäusewanne (1) über die Tiefe (b) ausfüllt.

10. Verkehrsüberwachungsgerät nach Anspruch 9, **dadurch gekennzeichnet,**
**dass** an den Seitenplatten (8.1 und 8.2) außenseitig vertikal verlaufend Führungsschienen (15) vorhanden sind, die jeweils gemeinsam mit Führungsleisten (16), die an den Seitenwänden (5.1, 5.2) innenseitig angebracht sind, eine Gleitführung bilden.

11. Verkehrsüberwachungsgerät nach Anspruch 9, **dadurch gekennzeichnet,**
**dass** in der Gehäusewanne (1) parallel zu den Seitenwänden (5.1, 5.2) eine Zwischenwand (14) angeordnet ist und an den Seitenplatten (8.1 und 8.2) außenseitig vertikal verlaufend Führungsschienen (15) vorhanden sind, die jeweils gemeinsam mit Führungsleisten (16), die an einer der Seitenwände (5.1, 5.2) innenseitig und an der Zwischenwand (14) angebracht sind, eine Gleitführung bilden.

## Claims

1. Traffic monitoring device with a device housing, wherein the device housing comprises an outer housing trough (1), a drawer (2) which is vertically displaceable in the housing trough (1), and a housing roof (3),
**characterized in that** several device modules (11) each having a beam axis are arranged in the drawer (2) by means of adjustable fastenings so that their beam axes can be adjusted relative to one another and relative to environmental features after the traffic monitoring device is mounted at the site of installation.

2. Traffic monitoring device according to claim 1, **characterized in that** the housing roof (3) is connected with the drawer (2).

3. Traffic monitoring device according to claim 1 or 2, **characterized in that** an adjustable fastening comprises a carrier plate (12) which is tiltable by a vertical angle (ß).

4. Traffic monitoring device according to claim 1 or 2, **characterized in that** an adjustable fastening comprises a mounting plate (13) which is pivotable by a horizontal angle (α).

5. Traffic monitoring device according to claim 3 or 4, **characterized in that** an adjustable fastening consists of a carrier plate (12) which is tiltable by a vertical angle (ß) and a mounting plate (13) which is pivotable by a horizontal angle (α) on the carrier plate (12).

6. Traffic monitoring device according to claim 5, **characterized in that** the mounting plates (13) are angles, of which one leg is connected to the carrier plate (12) and on the other leg the device module (11) is fixed in a suspended manner.

7. Traffic monitoring device according to claim 5, **characterized in that** the mounting plates (13) are plates, on which the device module (11) is fixed in a resting manner.

8. Traffic monitoring device according to one of claims 1 - 7, **characterized in that** the outer housing trough (1) comprises a rectangular floor (7) having a width (a) and a depth (b), two trapezoidal side walls (5.1 and 5.2) being arranged perpendicularly thereon, a height (c) as well as a back wall (4) being arranged perpendicularly and a front plate (6) being arranged in an inclined manner towards the floor (7) and having at least one glazed window opening.

9. Traffic monitoring device according to claim 8, **characterized in that** the drawer (2) consists of a floor plate (9) and two side plates (8.1 and 8.2), which are adapted to the side walls (5.1, 5.2) in shape and size, so that the drawer (2) fills the housing trough (1) over the depth (b).

10. Traffic monitoring device according to claim 9, **characterized in that** vertical guide rails (15) are provided at the outer sides of the side plates (8.1 and 8.2), which together with guide strips (16) mounted at the inner sides of the side walls (5.1, 5.2) form a sliding guide.

11. Traffic monitoring device according to claim 9, **characterized in that** an intermediate wall (14) is arranged in the housing trough (1) parallel to the side walls (5.1, 5.2) and vertical guide rails (15) are provided at the outer sides of the side plates (8.1 and 8.2), which together with guide strips (16) mounted at the inner side of one of the side walls (5.1, 5.2) and at the intermediate wall (14) form a sliding guide.

## Revendications

1. Appareil de surveillance du trafic doté d'un boîtier d'appareil, dans lequel le boîtier d'appareil comprend une cuve de boîtier (1) externe, un tiroir enfichable (2) qui est déplaçable verticalement dans la cuve de boîtier (1) et un couvercle de boîtier (3), **caractérisé en ce que** plusieurs modules d'appareil (11) chacun ayant un axe de faisceau sont disposés dans le tiroir enfichable (2) au moyen de fixations ajustables, de telle manière que leurs axes de faisceau peuvent être ajustés les uns par rapport aux autres et par rapport aux caractéristiques de l'environnement après la montage de l'appareil de surveillance du trafic sur le lieu d'installation.

2. Appareil de surveillance du trafic selon la revendication 1, **caractérisé en ce que** le couvercle de boîtier (3) est relié au tiroir enfichable (2).

3. Appareil de surveillance du trafic selon la revendication 1 ou 2, **caractérisé en ce qu'**une fixation ajustable comprend une plaque de support (12) basculable d'un angle vertical (ß).

4. Appareil de surveillance du trafic selon la revendication 1 ou 2, **caractérisé en ce qu'**une fixation ajustable comprend une plaque de montage (13) pivotable d'un angle horizontal (α).

5. Appareil de surveillance du trafic selon la revendication 3 ou 4, **caractérisé en ce qu'**une fixation ajustable est constituée d'une plaque de support (12) basculable d'un angle vertical (ß) et d'une plaque de montage (13) pivotable d'un angle horizontal (α) sur la plaque de support (12).

6. Appareil de surveillance du trafic selon la revendication 5, **caractérisé en ce que** les plaques de montage (13) sont des angles, dont une branche est reliée à la plaque de support (12) et sur l'autre branche le module d'appareil (11) est fixé de manière suspendue.

7. Appareil de surveillance du trafic selon la revendication 5, **caractérisé en ce que** les plaques de montage (13) sont des plaques, sur lesquelles est fixé de manière reposante le module d'appareil (11).

8. Appareil de surveillance du trafic selon une des revendications 1 - 7, **caractérisé en ce**
**que** la cuve de boîtier (1) externe est constituée d'un fond (7) rectangulaire ayant une largeur (a) et une profondeur (b), deux parois latérales (5.1 et 5.2) trapézoïdales disposées perpendiculairement au-dessus du fond (7), une hauteur (c) et une paroi arrière (4) disposée perpendiculairement et une plaque avant (6) disposée de manière inclinée vers le fond (7), la plaque avant (6) ayant au moins une ouverture de fenêtre vitrée.

9. Appareil de surveillance du trafic selon la revendication 8, **caractérisé en ce que** le tiroir enfichable (2) est constitué d'une plaque de fond (9) et deux plaques latérales (8.1 et 8.2), qui sont adaptées aux parois latérales (5.1, 5.2) en forme et en taille, de telle façon que le tiroir enfichable (2) rempli la cuve de boîtier (1) sur la profondeur (b).

10. Appareil de surveillance du trafic selon la revendication 9, **caractérisé en ce que** des rails de guidage (15) verticaux sont présents aux côtés extérieurs des plaques latérales (8.1 et 8.2), les rails de guidage formant une guidage à glissement avec des baguettes de guidage (16) fixées aux côtés intérieurs des parois latérales (5.1,5.2).

11. Appareil de surveillance du trafic selon la revendication 9, **caractérisé en ce qu'**une paroi intermédiaire (14) est disposée dans la cuve de boîtier (1) parallèle aux parois latérales (5.1, 5.2) et des rails de guidage (15) verticaux sont présents aux côtés extérieurs des plaques latérales (8.1 et 8.2), les rails de guidage formant une guidage à glissement avec des baguettes de guidage (16) fixées au côté intérieur d'une des parois latérales (5.1, 5.2) et à la paroi intermédiaire (14).
